# EUROPEAN PATENT APPLICATION

(11) **EP 4 740 742 A1**
(43) Date of publication of application: **13.05.2026**
(21) Application number: 24835919.2
(22) Date of filing: 20.06.2024
(51) Int. Cl.: A23G 1/44, A23G 1/56, A23G 9/38, A23J 3/16, A23J 3/30, A23L 2/00, A23L 2/52, A23L 11/00, A23L 27/00, A23L 27/21

(54) **CACAO-CONTAINING FOOD AND DRINK AND CACAO ASTRINGENT TASTE INHIBITOR**

(30) Priority: 04.07.2023 JP 2023109693
(71) Applicant: Fuji Oil Co., Ltd., Izumisano-shi, Osaka 598-8540 (JP)
(72) Inventor: IKENAGA, Naoya, Izumisano-shi, Osaka 598-8540 (JP); TAKEDA, Mariko, Izumisano-shi, Osaka 598-8540 (JP)
(74) Representative: Boult Wade Tennant LLP
(86) International application number: PCT/JP2024/022386
(87) International publication number: WO 2025/009406

(57) **Abstract**

An object is to provide a cocoa-containing food or beverage in which unpleasant tastes such as astringent or harsh tastes derived from a cocoa ingredient are inhibited. Another object is to provide a cocoa astringent taste inhibitor that can inhibit an unpleasant taste such as astringent or harsh tastes derived from a cocoa ingredient. A cocoa-containing food or beverage containing a hydrolyzed protein degradation product and having a proportion of nonfat cocoa solid in solid content of 16 mass% or more.

## Description

### Technical Field

### Related Art

This application claims the benefit of priority of JP 2023-109693 filed with the Japan Patent Office on July 4, 2023. The priority application is incorporated herein by reference in its entirety.

The present invention relates to a cocoa-containing food or beverage and a cocoa astringent taste inhibitor.

### Background Art

Cocoa-containing foods and beverages such as chocolate are widely consumed worldwide due to their favorable flavor. In many cases, common chocolate is produced from raw materials such as sugar, cocoa butter, and powdered milk in addition to cocoa mass.

Chocolate, which is mainly consumed as a luxury grocery item, has been increasingly demanded for active intake of cacao-derived dietary fiber, polyphenols, and the like, driven by recent increases in health consciousness. To meet consumers' demand for active intake, so-called high-cocoa chocolate is sold, which contains a large amount of cocoa ingredients and a reduced amount of sugar and powdered milk.

However, polyphenols, one of the cacao-derived health-promoting components, may have a flavor that is astringent, harsh, or the like. Therefore, high-cocoa chocolate containing a large amount of cocoa ingredients has a flavor problem, making it difficult to enjoy as a luxury grocery item.

For example, Patent Document 1 describes a method of masking the astringent taste of high-cocoa chocolate by adding vegetable-derived essential oils and aroma compounds.

Patent Document 2 describes an unpleasant taste inhibitor, obtained by dispersing water-phase particles containing polyphenol materials in an oil phase.

### Citation List

### Patent Document

Patent Document 1: JP 2018-148805 A
Patent Document 2: JP 2020-014447 A

### Summary of Invention

### Technical Problem

An object of the present invention is to provide a cocoa-containing food or beverage in which unpleasant tastes such as astringent or harsh tastes derived from a cocoa ingredient are inhibited. Another object of the present invention is to provide a cocoa astringent taste inhibitor capable of inhibiting unpleasant tastes such as astringent or harsh tastes derived from a cocoa ingredient.

### Solution to Problem

The inventors have studied a novel cocoa-containing food or beverage that inhibits the astringent or harsh taste derived from a cocoa ingredient and can be enjoyed as a luxury grocery item.

Patent Document 1 describes a masking effect of essential oil, but does not suggest proteins or protein degradation products.

Patent Document 2 also does not suggest any proteins or protein degradation products, and further, polyphenols as active ingredients for inhibiting unpleasant tastes must be present in a water phase, and the production process becomes complicated to disperse water-phase particles in an oil phase, potentially requiring advanced production of the preparation.

The present inventors conducted intensive studies to solve the above problems. As a result, the present inventors have found that unpleasant tastes such as astringent and harsh tastes derived from cacao can be inhibited by adding a specific protein degradation product to a cocoa-containing food or beverage, and thus have completed the present invention.

That is, the present invention encompasses the following inventions.
(1) A cocoa-containing food or beverage containing a hydrolyzed protein degradation product and having a proportion of nonfat cocoa solid in solid content of 16 mass% or more.
(2) The cocoa-containing food or beverage according to (1), wherein a free amino acid content in a solid content of the hydrolyzed protein degradation product is 2 mass% or more.
(3) The cocoa-containing food or beverage according to (1) or (2), having a polyphenol content of from 1300 mg/100 g to 6000 mg/100 g.
(4) The cocoa-containing food or beverage according to (3), wherein the cocoa-containing food or beverage is chocolate.
(5) A cocoa astringent taste inhibitor, containing a hydrolyzed protein degradation product as an active ingredient.
(6) The cocoa-containing food or beverage according to (1) or (2), wherein the hydrolyzed protein degradation product is derived from a vegetable.
(7) The cocoa-containing food or beverage according to (3), wherein the hydrolyzed protein degradation product is derived from a vegetable.
(8) The cocoa-containing food or beverage according to (4), wherein the hydrolyzed protein degradation product is derived from a vegetable.
(9) The cocoa-containing food or beverage according to (6), wherein the hydrolyzed protein degradation product is derived from beans or small grains.
(10) The cocoa-containing food or beverage according to (7), wherein the hydrolyzed protein degradation product is derived from beans or small grains.
(11) The cocoa-containing food or beverage according to (8), wherein the hydrolyzed protein degradation product is derived from beans or small grains.
(12) A method for producing a cocoa-containing food or beverage having a proportion of nonfat cocoa solid in solid content of 16 mass% or more, the method including blending a hydrolyzed protein degradation product.
(13) A method for producing chocolate having a proportion of nonfat cocoa solid in solid content of 16 mass% or more, the method including blending a hydrolyzed protein degradation product in any one of the following steps (A) to (D):
   (A) mixing a powder raw material including cocoa powder and saccharide with a part of cocoa mass and/or oil and/or fat in blending;
   (B) refining dough obtained by mixing the powder raw material with a part of the cocoa mass and/or oil and/or fat;
   (C) kneading or mixing the refined dough with the remaining cocoa mass and/or oil and/or fat to prepare a chocolate dough; and
   (D) cooling and solidifying the chocolate dough by controlling a temperature of the chocolate dough.
(14) A method for inhibiting an astringent taste derived from cacao, including blending a hydrolyzed protein degradation product into a cocoa-containing food or beverage.

### Advantageous Effects of Invention

According to the present invention, it is possible to provide a cocoa-containing food or beverage in which an unpleasant taste such as astringent or harsh tastes is inhibited, and a good cocoa flavor is perceived.

Further, it is possible to provide a cocoa astringent taste inhibitor that can inhibit an unpleasant taste such as astringent or harsh tastes derived from a cocoa ingredient.

### Description of Embodiments

An embodiment of the present invention will be described in detail below.

The cocoa-containing foods and beverages in the present invention refer to all kinds of foods and beverages containing cocoa ingredients, and examples thereof include chocolate, chocolate filling, cacao filling, chocolate drink, cocoa drink, chocolate spread, chocolate sauce, chocolate ice cream, and chocolate soft serve ice cream. Among these, typical examples of cocoa-containing foods and beverages include chocolate, chocolate fillings, and chocolate drinks. Furthermore, the cocoa-containing food or beverage that is more likely to exert the effect of the present invention is chocolate.

The chocolates in the present invention refer to not only chocolates, quasi-chocolates, and chocolate-based foods defined by the Japan National Chocolate Industry Fair Trade Council and the Chocolate-Based Food Fair Trade Council but also products containing a cocoa ingredient (cocoa mass, cocoa powder and/or cocoa butter) as an essential component and blended with auxiliary raw materials, such as a saccharide, a powdered milk, a dietary fiber, a fruit juice powder, a fruit powder, a tasting material, an emulsifier, an aroma agent, and a colorant in any proportion.

In the present invention, among chocolates, a chocolate having a cocoa content of 60 mass% or more (nonfat cocoa solid of 20 mass% or more) is particularly referred to as high-cocoa chocolate.

Cocoa ingredients used in cocoa-containing foods and beverages, particularly cocoa mass and cocoa powder, may have different astringent and/or harsh tastes depending on the origin of the cacao. However, the effect of the present invention is exhibited by using cacao produced in any country, regardless of the origin. The process of producing cocoa mass, cocoa powder, and cocoa butter from cacao beans is not limited to any particular method.

The cocoa-containing food or beverage of the present invention has a nonfat cocoa solid of 16 mass% or more in the solid content. The nonfat cocoa solid refers to a portion of cocoa ingredients, such as cocoa mass and cocoa powder, from which cocoa butter and water have been removed. In the present invention, it is considered that most of the components causing the astringent or harsh tastes of cacao are contained in the nonfat cocoa solid. The nonfat cocoa solid also contains a high level of polyphenols, which are health-promoting components in cacao.

In the present invention, the nonfat cocoa solid is contained preferably at 17 mass% or more, more preferably 18 mass% or more, 20 mass% or more, 22 mass% or more, 24 mass% or more, 26 mass% or more, or 28 mass% or more, in the solid content. The nonfat cocoa solid is contained preferably at 70 mass% or less, more preferably 65 mass% or less, 60 mass% or less, 55 mass% or less, 50 mass% or less, or 45 mass% or less, in the solid content. When the content of the nonfat cocoa solid falls within an appropriate range, a cocoa-containing food or beverage that is more easily consumed can be prepared as a luxury grocery item.

The cocoa-containing food or beverage of the present invention contains a hydrolyzed protein degradation product. The hydrolyzed protein degradation product refers to a composition obtained by hydrolyzing a protein raw material with an enzyme, heat, or an acid.

The amount of the protein degradation product to be added in the cocoa-containing food or beverage of the present invention can be appropriately adjusted in order to inhibit the astringent or harsh tastes derived from cacao. The amount added is preferably 0.0001 mass% or more and 3 mass% or less. The lower limit of the amount added is more preferably 0.0005 mass% or more, 0.001 mass% or more, 0.005 mass% or more, or 0.008 mass% or more. Further, the upper limit of the amount added is more preferably 2.5 mass% or less, 2 mass% or less, 1.8 mass% or less, 1.5 mass% or less, 1.2 mass% or less, or 1 mass% or less. By making the amount added preferable, a cocoa-containing food or beverage that can provide a good cacao-specific bitterness while inhibiting astringent or harsh tastes derived from cacao can be prepared. On the other hand, when a large amount is added, the flavor of the protein degradation product itself may be perceived.

The properties of the hydrolyzed protein degradation product are not particularly limited, and a protein degradation product in the form of liquid, powder, or the like can be used. Examples thereof may include those obtained by simply hydrolyzing a liquid protein raw material, such as cow's milk or vegetable milk; those obtained by increasing the viscosity by concentration processing, such as concentration under reduced pressure or freeze concentration; or those in powder form obtained by powdering processing, such as spray drying or freeze drying.

When the cocoa-containing food or beverage is chocolate, the protein degradation product in powder form may be blended before refining or may be blended during mixing. Alternatively, it may be blended after the chocolate is produced and then melted. In the case of a liquid protein degradation product, the solid content is usually about 0.1 to 20 mass%, and the protein degradation product can be blended by mixing and dispersing after the chocolate is melted during or after chocolate production.

The protein raw material of the hydrolyzed protein degradation product is a raw material containing at least protein regardless of its origin. Proteins can be selected from any of the vegetable, animal, or microbial fermentation origins. When powdered milk or the like is not used in order to avoid blending of milk raw materials, it is preferable to select vegetable protein and/or protein derived from microbial fermentation from the viewpoint that non-animal chocolate can be produced. Examples of the vegetable protein include, but are not particularly limited to, natural raw materials, such as small grains, beans, grains, and malts; and soybean protein, pea protein, mung bean protein, broad bean proteins, wheat protein, oat protein, rice protein, hemp protein, nut protein, and malt extracts, which are obtained by concentration processing of a protein from a natural raw material. For the animal protein, a protein derived from casein, whey, collagen, or the like can be used. In addition, as the protein derived from microbial fermentation, a protein derived from yeast extract or the like can be used.

Examples of preferred raw material as a raw material from which the vegetable protein is derived include, in particular, beans and small grains, or soybean protein, pea protein, mung bean protein, broad bean protein, wheat protein, and oat protein obtained by concentrating proteins from beans and small grains. Noted that the beans used herein are plants of the Fabaceae family and the Faboideae subfamily, and examples thereof include soybeans, peas, mung beans, kidney beans, scarlet runner bean, red beans, and chickpeas. Cacao is a plant belonging to the Malvaceae family, and is a seed of a plant different from the beans that are the raw material from which the vegetable protein of the present invention is derived. Also, examples of the small grains include wheat, barley, and oats, and examples of the grains include seeds of plants such as corn and rice.

The hydrolyzed protein degradation product in the present invention preferably contains free amino acids at 2 mass% or more in terms of solid content. More preferably, the protein degradation product may contain free amino acids at 4 mass% or more, 5 mass% or more, 7 mass% or more, 10 mass% or more, 15 mass% or more, or 20 mass% or more in terms of solid content. Also, the protein degradation product can contain free amino acids more preferably at 40 mass% or less, 35 mass% or less, or 30 mass% or less in terms of solid content.

Free amino acids are contained in the solid content of the hydrolyzed protein degradation product within the above-mentioned appropriate range, making it possible to effectively inhibit the astringent or harsh tastes derived from cacao in combination with a peptide fraction. When the free amino acid content in the solid content of the hydrolyzed protein degradation product is too high, the flavor of the amino acids themselves may be strongly exhibited, which may not be preferable.

Noted that, in the present specification, the content in terms of solid content is synonymous with the content in the solid content excluding water contained in the protein degradation product.

The free amino acid content can be calculated by liquid chromatography/mass spectrometry (LC/MS).

As an example, the content can be calculated from the measurement result of a standard solution using a ninhydrin coloring method, which is a post-column derivatization method for separating and derivatizing free amino acids in a sample with an amino acid analyzer.

The hydrolyzed protein degradation product is generally known as a peptide material or the like, but the protein degradation product itself may have a strong astringent or harsh taste depending on the degree of decomposition. In the present invention, it has been found that even a protein degradation product having a strong astringent or harsh taste has an inhibitory effect on the astringent or harsh taste derived from cocoa ingredients, which has not been known in the art.

The protein degradation product included in the present invention is a composition that has been subjected to a hydrolysis treatment and contains free amino acids. The cocoa-containing food or beverage contains free amino acids originally contained in cacao-derived raw materials such as cocoa mass, in addition to the free amino acids derived from the protein degradation product, but these free amino acids originally contained in the cacao-derived raw materials are excluded from the free amino acids derived from the protein degradation product of the present invention.

The cocoa-containing food or beverage of the present invention may contain auxiliary raw materials in addition to the cocoa ingredients and the hydrolyzed protein degradation product. Necessary food raw materials (such as oil and/or fat, fruit juice, fruit pulp, vegetable, sugar, dairy product, grain flour, starch, bird, animal, and fish meat products, and seasoning) and food additives (such as emulsifier, mineral, vitamin, thickening stabilizer, acidulant, and aroma agent) can be appropriately used.

The oil and/or fat used in the cocoa-containing food or beverage of the present invention is not particularly limited, and examples of usable oils and/or fats can include, in addition to cocoa butter, vegetable oils and/or fats, such as soybean oil, sunflower seed oil, cottonseed oil, rapeseed oil, high erucic acid rapeseed oil, peanut oil, rice bran oil, corn oil, safflower oil, olive oil, kapok oil, sesame oil, evening primrose oil, palm oil, palm kernel oil, coconut oil, and medium-chain triglycerides (MCT); animal oils and/or fats such as milk fat, beef tallow, and lard; and their hydrogenated oils, fractionated oils, hydrogenated fractionated oils, fractionated hydrogenated oils, and processed oils and/or fats obtained by interesterification and the like; and furthermore mixed oils and/or fats thereof.

Into the cocoa-containing food or beverage of the present invention, oil and/or fat other than cocoa butter may be blended as appropriate, depending on the intended use.

For example, in the case of a cocoa-containing food or beverage to be combined with a frozen dessert, oil and/or fat that is liquid at room temperature, such as soybean oil, sunflower seed oil, rapeseed oil, corn oil, or soft palm oil, may be blended in part in order to improve the meltability in the mouth.

In the present invention, the astringent or harsh taste of cacao is a flavor that is perceived as unpleasant when eaten, among the flavors derived from cacao. Here, the astringent taste is a stimulation perceived in the mouth, which is also expressed as astringency, and is, in short, a stimulation accompanying a sensation as if the mucosa of the oral cavity were "contracted" (dried, shrunk) or as if the mucosa of the oral cavity were "tightened", which is perceived when putting an astringent persimmon or red wine in the mouth. Further, the harsh taste is a flavor that clings to the tongue and gives an unpleasant aftertaste.

The chocolate as the cocoa-containing food or beverage of the present invention preferably contains polyphenols in an amount of from 1300 mg/100 g to 6000 mg/100 g. Polyphenols contained in cacao are known to have health benefits such as antioxidant effects, and are considered to be one of the reasons why high-cocoa chocolate has been widely sold in recent years. In the present invention, the polyphenols contained in the chocolate are more preferably 1400 mg/100 g or more, and further preferably 1500 mg/100 g or more, 1600 mg/100 g or more, 1700 mg/100 g or more, 1800 mg/100 g or more, 1900 mg/100 g or more, 2000 mg/100 g or more, 2100 mg/100 g or more, or 2200 mg/100 g or more. Furthermore, the polyphenols contained in the chocolate are more preferably 5800 mg/100 g or less, and further preferably 5600 mg/100 g or less, 5500 mg/100 g or less, 5400 mg/100 g or less, 5300 mg/100 g or less, 5200 mg/100 g or less, 5100 mg/100 g or less, or 5000 mg/100 g or less.

The chocolate containing polyphenols in the above preferred range can more clearly exhibit the effects of the present invention. Examples of polyphenols contained in cacao include monomers such as catechin, and oligomers (dimers or higher order oligomers) such as procyanidins obtained by polymerization of catechin and the like, and tannin.

In the present invention, the polyphenol content is measured using the Folin-Ciocalteu method. More specifically, a cocoa ingredient such as cocoa mass or cocoa-containing food or beverage is defatted with hexane, and then an extract is prepared by extracting polyphenols from the defatted sample with methanol. The extract thus obtained is subjected to measurement and colorimetry by a spectrophotometer according to the Folin-Ciocalteu method. The polyphenol content of each sample is determined from a calibration curve previously created with epicatechin.

In the present invention, the hydrolyzed protein degradation product may be obtained by hydrolyzing a protein raw material, and then removing impurities and precipitates by centrifugation, filtration, acid treatment, or the like, if necessary, and further sterilizing, concentrating, or/and drying the hydrolyzed protein degradation product.

The method of hydrolyzing the protein degradation product is not particularly limited, and the protein degradation product is preferably hydrolyzed with a protein hydrolase. The enzyme to be used is not particularly limited, and may be appropriately selected from a method using a plurality of protein hydrolases, a method of performing enzymatic degradation in a batch manner or a continuous manner, a method of performing enzymatic degradation by heating and denaturing a raw material serving as a substrate in advance, and the like. Also, a saccharide-degrading enzyme, an oil-degrading enzyme, or the like may be used in combination, if necessary.

The cocoa-containing food or beverage is produced by mixing, emulsifying, and/or homogenizing cocoa ingredients, hydrolyzed protein degradation products, and other auxiliary raw materials, and the process is not particularly limited. When a cocoa-containing food or beverage other than chocolate is prepared using chocolate, the order of mixing the raw materials is not limited, and the hydrolyzed protein degradation product may be previously blended into chocolate, or may be added separately from chocolate, as with other auxiliary raw materials.

The method for producing the chocolate, which is one of the cocoa-containing foods and beverages according to the present invention, can be carried out in the same manner as in producing a general chocolate. Specifically, the chocolate can be obtained by appropriately selecting and mixing raw materials such as various powdered foods such as cocoa powder and saccharide, an emulsifier, an aroma agent, and a pigment with cocoa mass and oil and/or fat, and performing roll-refining as a refining step, and conching as a kneading step or mixing treatment as a mixing step. Alternatively, a production method such as a production method in which a mixing step and a refining step are performed in parallel using a ball mill, a bead mill, or the like can also be used.

The timing of blending the hydrolyzed protein degradation product of the present invention is not particularly limited, as long as it is during the process of the method for producing chocolate. For example, it can be blended in any of the following steps (A) to (D).
(A) mixing a powder raw material including cocoa powder and saccharide with a part of cocoa mass and/or oil and/or fat in blending;
(B) refining dough obtained by mixing the powder raw material with a part of the cocoa mass and/or oil and/or fat;
(C) kneading or mixing the refined dough with the remaining cocoa mass and/or oil and/or fat to prepare a chocolate dough; and
(D) cooling and solidifying the chocolate dough by controlling a temperature of the chocolate dough.

When the properties of the hydrolyzed protein degradation product are in the form of powder or flakes, the texture thereof after addition may be checked, and the protein degradation product may be added before the refining. Flakes with large particles are preferably added before the refining. In addition, when it is in the form of fine powder, it can be added during the kneading or the mixing after the refining. When the properties of the hydrolyzed protein degradation product are in the liquid form, the timing of addition is not particularly limited, and it can be added by stirring and mixing well during the addition.

The cocoa-containing food or beverage of the present invention contains a hydrolyzed protein degradation product, and thereby, the astringent or harsh taste derived from the cocoa ingredient is inhibited. The hydrolyzed protein degradation product used in the present invention is characterized by inhibiting the astringent or harsh taste but not inhibiting the bitterness specific to cocoa ingredients. When chocolate is prepared, the bitterness derived from the cocoa ingredients can be recognized when consumed as a good flavor also called a bittersweet flavor or a chocolate taste, which are characteristic of chocolate. Typically, in a preparation for masking, there is a tendency for the astringent or harsh taste to be inhibited, but the bitterness is also weakened. However, in the present invention, the bitterness can be maintained even when the astringent or harsh taste is inhibited.

As described above, the present invention can be rephrased as a method for inhibiting an astringent taste derived from cacao by blending a hydrolyzed protein degradation product in a cocoa-containing food or beverage.

Further, when a hydrolyzed protein degradation product is used as the astringent taste inhibitor, the inhibitor may be prepared by appropriately mixing other excipients, stabilizers, and the like, as long as the inhibitor contains the hydrolyzed protein degradation product.

### Examples

Hereinafter, the present invention will be more specifically described in detail with reference to Examples and Comparative Examples, but the spirit of the present invention is not limited to the following Examples. Noted that, in the examples, values in "part" or "%" are all expressed on a mass basis.

### • Preparation of Chocolate

Cocoa mass and sugar were mixed using a kneader according to the formulations listed in Table 1, and then the mixture was refined using a roll refiner. After refining, conching, which is a kneading treatment, was performed using a conche with a jacket water temperature set to 50°C. Thereafter, cocoa butter was mixed to prepare chocolate, which is one of the cocoa-containing foods and beverages.

Chocolate (1) to chocolate (3) had a cocoa content of 75.4 mass% or 98.2 mass%, and corresponded to high-cocoa chocolate having a cocoa content of 60 mass% or more. The chocolate (4) had a cocoa content of 49.6 mass%.

Noted that the cocoa mass 1 was obtained by processing cacao beans produced in Ecuador into cocoa mass for use. The cocoa mass 2 was obtained by processing cacao beans produced in Ghana into cocoa mass for use.

**[Table 1]**

| | Chocolate (1) | Chocolate (2) | Chocolate (3) | Chocolate (4) |
|---|---|---|---|---|
| Cocoa mass 1 [%] | 70.4 | 0 | 91.4 | 42.0 |
| Cocoa mass 2 [%] | 0 | 70.4 | 0 | 0 |
| Sugar [%] | 23.2 | 23.2 | 0 | 49.8 |
| Cocoa butter [%] | 6.4 | 6.4 | 8.6 | 8.4 |
| Total | 100 | 100 | 100 | 100 |
| Cocoa content/product [%] | 75.4 | 75.4 | 98.2 | 49.6 |
| Nonfat cocoa solid/product [%] | 30.3 | 30.3 | 39.3 | 18.1 |
| Nonfat cocoa solid/solid content [%] | 30.7 | 30.7 | 40.0 | 18.2 |
| Polyphenols/product [mg/100 g] | 3503 | 2292 | 4548 | 2090 |

### • Study 1

### o Addition of Hydrolyzed Protein Degradation Product

The prepared chocolate was melted at a product temperature of from 50°C to 60°C, and HINUTE-HKB (available from Fuji Oil Co., Ltd.), which is a hydrolyzed protein degradation product, was added according to the formulations listed in Table 2. After the addition, the mixture was stirred thoroughly to fully disperse the components.

Note that the free amino acid content in the solid content of HINUTE-HKB was 22 mass% as a result of the analysis shown below.

### o Measurement of Free Amino Acid

The samples were dissolved in 5% TCA solution (trichloroacetic acid solution).

The supernatants centrifuged at 10.000 rpm × 10 minutes were filtered using a 0.22 µm filter.

The filtrates were analyzed using a high-speed amino acid analyzer (LA8080: available from Hitachi High-Tech Corporation), and the free amino acid content was calculated based on the result of the standard solution.
Standard solution: an amino acid-mixed standard solution (available from FUJIFILM Wako Pure Chemical Corporation)
Mobile phase: sodium citrate buffer solution
Reaction liquid: ninhydrin reagent
Wavelength: 570 nm or 440 nm

### o Flavor Evaluation

The chocolates of the Examples to which the hydrolyzed protein degradation product was added and the Comparative Examples to which the hydrolyzed protein degradation product was not added were adjusted to a product temperature of 30 to 32°C, subjected to a tempering operation, then filled in a mold, and cooled at 10°C for 30 minutes.

The cooled and solidified chocolate was removed from the mold and aged at 20°C for one week, after which the flavor was evaluated. The flavor evaluation was carried out by five taste panelists skilled in the field of chocolate to perform a sensory evaluation of the obtained chocolate. The sensory evaluation was scored from 1 to 5 according to the following criteria, as discussed by the panelists.

### Evaluation of Astringent and Harsh Tastes

5 points: No astringent or harsh tastes were perceived, and very good
4 points: A hint of astringent and/or harsh tastes was perceived, and good
3 points: Astringent and/or harsh tastes were perceived, but acceptable range
2 points: Astringent and/or harsh tastes were perceived, and unsuitable
1 point: Strong astringent and/or harsh tastes were perceived, and unsuitable

### Evaluation of Inhibitory Effect on Astringent and Harsh Tastes

In the evaluation of astringent and harsh tastes previously evaluated, the difference in score of the flavor evaluation between the evaluation of chocolate (1) alone and the evaluation of the product under study was calculated, and when the difference in score was 2 points or more, it was determined to be effective as the evaluation of inhibitory effect on the astringent and harsh tastes. Further, when the difference in score was 3 points or more, the inhibitory effect was evaluated as remarkably effective.

On the other hand, when the difference in score was 1 point or less, the inhibitory effect was evaluated as not effective.

In Study 1, the effects were evaluated by the difference in score from the evaluation of the astringent and harsh tastes of Comparative Example 1 using the chocolate (1) alone.

Any flavor observations other than astringent and harsh tastes were also discussed. The results are listed in Table 2.

**[Table 2]**

| | Comparative Example 1 | Example 1 | Example 2 | Example 3 | Example 4 | Example 5 | Example 6 | Example 7 | Example 8 |
|---|---|---|---|---|---|---|---|---|---|
| Chocolate (1) [parts] | 100 | 100 | 100 | 100 | 99.9 | 99.5 | 99.2 | 99.0 | 98.5 |
| HINUTE-HKB [parts] | 0 | 0.01 | 0.001 | 0.0001 | 0.1 | 0.5 | 0.8 | 1.0 | 1.5 |
| Astringent and harsh tastes | 1 | 5 | 5 | 3 | 5 | 5 | 5 | 5 | 5 |
| Inhibitory effect on astringent and harsh tastes | 0 Not effective | 4 Remarkably effective | 4 Remarkably effective | 2 Effective | 4 Remarkably effective | 4 Remarkably effective | 4 Remarkably effective | 4 Remarkably effective | 4 Remarkably effective |
| Other flavor characteristics | Weak bitterness due to astringent and harsh taste | Good bitterness | Good bitterness | A sense of bitterness | Good bitterness | Good bitterness | Good bitterness | Slightly weak bitterness | A hint of the degradation product flavor Weak bitterness |

In the Examples in which HINUTE-HKB, which is a hydrolyzed protein degradation product, was added, the astringent and harsh tastes were inhibited. The astringent and harsh tastes were inhibited, whereas the bitterness characteristic of chocolate was maintained. This effect was particularly remarkable in Examples in which the hydrolyzed protein degradation product was added at 0.01 mass% to 0.8 mass%. When the hydrolyzed protein degradation product was added in excess, the flavor of the protein degradation product was perceived in some cases, although the inhibitory effect on astringent and harsh tastes was effective. In some cases, the bitterness was slightly weakened by the perception of the flavor of the protein degradation product.

### • Study 2

### o Change of Protein Degradation Product

According to the formulations listed in Table 3, samples were prepared in which "HINUTE AM" (available from Fuji Oil Co., Ltd.) or "HINUTE DL" (available from Fuji Oil Co., Ltd.) was used as the hydrolyzed protein degradation product, by using prepared chocolate (1).

Soybean protein "FUJIPRO CL" (available from Fuji Oil Co., Ltd.) or soybean protein "FUJIPRO F" (available from Fuji Oil Co., Ltd.) was added instead of the protein degradation product, to prepare the Comparative Examples in a similar manner.

The soybean protein "FUJIPRO CL" was mixed with amino acids equivalent to the free amino acids detected in "HINUTE HKB" at a ratio of FUJIPRO CL:amino acid mixture = 78:22 to separately prepare "amino acid-mixed FUJIPRO CL", which was then mixed with the chocolate (1).

The mixed amino acids were specifically L-aspartic acid, L-threonine, L-serine, L-glutamic acid, glycine, L-alanine, L-valine, L-methionine, L-cysteine, L-isoleucine, L-leucine, L-tyrosine, L-phenylalanine, L-lysine hydrochloride, L-histidine, L-arginine, and L-proline, and were adjusted at a ratio based on the measurement results of free amino acids of "HINUTE HKB" to prepare "amino acid-mixed FUJIPRO CL".

Further, those to which a whey peptide "HWP117" (available from TATUA Co-operative Dairy Company Ltd.), which is a hydrolyzed milk protein degradation product, was added were similarly prepared.

The respective chocolates obtained were filled in a mold and solidified in the same manner as in Study 1, aged at 20°C for one week and then evaluated.

Also in Study 2, the inhibitory effect on astringent and harsh tastes was evaluated by the difference in score from the evaluation of the astringent and harsh tastes of Comparative Example 1 using the chocolate (1) alone. The results are listed in Table 3.

**[Table 3]**

| | Example 9 | Example 10 | Comparative Example 2 | Comparative Example 3 | Comparative Example 4 | Example 11 |
|---|---|---|---|---|---|---|
| Chocolate (1) [parts] | 100 | 100 | 100 | 100 | 100 | 100 |
| HINUTE-AM [parts] | 0.01 | 0 | 0 | 0 | 0 | 0 |
| HINUTE-DL [parts] | 0 | 0.01 | 0 | 0 | 0 | 0 |
| FUJIPRO-CL [parts] | 0 | 0 | 0.01 | 0 | 0 | 0 |
| FUJIPRO-F [parts] | 0 | 0 | 0 | 0.01 | 0 | 0 |
| Amino acid-mixed FUJIPRO-CL [parts] | 0 | 0 | 0 | 0 | 0.01 | 0 |
| HWP117 [parts] | 0 | 0 | 0 | 0 | 0 | 0.01 |
| Amount of free amino acids in protein degradation product/solid content of protein degradation product [%] | 2 | 0.3 | 0.1 or less* | 0.1 or less* | 0.1 or less* | 4 |
| Astringent and harsh tastes | 4 | 3 | 2 | 1 | 2 | 3 |
| Inhibitory effect on astringent and harsh taste | 3 Remarkably effective | 2 Effective | 1 Not effective | 0 Not effective | 1 Not effective | 2 Effective |

| | | | | | | |
|---|---|---|---|---|---|---|
| *The amount of free amino acids [%] in the solid content of the soybean protein used is shown. | | | | | | |

By adding the hydrolyzed protein degradation product, the inhibitory effect on astringent and harsh tastes was confirmed. It was found that the inhibitory effect varies depending on the amount of free amino acids contained in the solid content of the hydrolyzed protein degradation product. In the protein material in which amino acids were separately mixed, even when the amino acids were mixed to the same degree as the protein degradation product, the inhibitory effect on astringent and harsh tastes was not obtained, and thus it was confirmed that the protein degradation product was effective.

Based on the results of Studies 1 and 2, a larger amount of free amino acids contained in the solid content of the hydrolyzed protein degradation product led to a better inhibitory effect on astringent and harsh tastes. In addition, when the amount of free amino acids contained in the solid content was similar, the inhibitory effect on astringent and harsh tastes was higher in the vegetable-derived protein degradation product than in the milk-derived protein degradation product.

### • Study 3

### o Preparation of Protein Degradation Products Originating from Different Raw Materials

Pea proteins "Empro E86" (available from Emsland Group) were dissolved in water to a protein concentration of 5 mass%, and were decomposed at 53°C for 2 hours or 4 hours using endopeptidase and exopeptidase as protein hydrolases. Thereafter, the aqueous solutions were heated at 80°C or higher for 10 minutes or longer to inactivate the enzymes, and the resulting aqueous solutions were each used as a sample A and a sample B of the hydrolyzed protein degradation products. Each was added to the chocolate (1) according to the formulations listed in Table 4.

The addition of the sample A or the sample B to the chocolates was performed by adding the sample A or the sample B to the chocolate melted at 50 to 60°C using a stirrer equipped with a propeller blade (available from TOKYO RIKAKIKAI CO., LTD.), and then stirring the mixture at a rotation speed of 400 rpm for 5 minutes.

Broad bean proteins "Faba Bean Isolate" (available from Australian Plant Proteins) were dissolved in water to a protein concentration of 5 mass%, and were decomposed at 53°C for 2 hours or 4 hours using endopeptidase and exopeptidase as protein hydrolases. Thereafter, the aqueous solutions were heated at 80°C or higher for 10 minutes or longer to inactivate the enzymes, and the resulting aqueous solutions were used as a sample C and a sample D of the hydrolyzed protein degradation products. Each was added to the chocolate (1) according to the formulations listed in Table 4.

The addition to the chocolate was performed in the same manner as in the addition method of the sample A or the sample B described above.

Low-fat soy milk "BIMI-TONYU" (available from Fuji Oil Co., Ltd.) was decomposed at 53°C for 4 hours using endopeptidase and exopeptidase as the protein hydrolases. Thereafter, the aqueous solution was heated at 80°C or higher for 10 minutes or longer to inactivate the enzymes, and the resulting aqueous solution was used as a sample E of the hydrolyzed protein degradation product. It was added to the chocolate (1) according to the formulations listed in Table 4.

The addition to the chocolate was performed in the same manner as in the addition method of the sample A or the sample B described above.

The respective chocolates obtained were filled in a mold and solidified in the same manner as in Study 1, aged at 20°C for one week and then evaluated.

In Study 3 as well, the inhibitory effect on astringent and harsh tastes was evaluated by the difference in score from the evaluation of the astringent and harsh tastes of Comparative Example 1 using the chocolate (1) alone. The results are listed in Table 4.

**[Table 4]**

| | Example 12 | Example 13 | Example 14 | Example 15 | Example 16 |
|---|---|---|---|---|---|
| Chocolate (1) [parts] | 99.0 | 99.0 | 99.0 | 99.0 | 99.0 |
| Pea protein degradation product (sample A) [Parts] | 1.0 | 0 | 0 | 0 | 0 |
| Pea protein degradation product (sample B) [Parts] | 0 | 1.0 | 0 | 0 | 0 |
| Broad bean protein degradation product (sample C) [Parts] | 0 | 0 | 1.0 | 0 | 0 |
| Broad bean protein degradation product (sample D) [Parts] | 0 | 0 | 0 | 1.0 | 0 |
| Protein degradation product (sample E) [Parts] | 0 | 0 | 0 | 0 | 1.0 |
| Amount of free amino acids in protein degradation product/solid content of protein degradation product [%] | 13 | 19 | 15 | 21 | 9 |
| Astringent and harsh tastes | 4 | 4 | 4 | 5 | 5 |
| Inhibitory effect on astringent and harsh taste | 3 | 3 | 3 | 4 | 4 |
| | Remarkably effective | Remarkably effective | Remarkably effective | Remarkably effective | Remarkably effective |

The above results show that the addition of the hydrolyzed protein degradation product containing free amino acids could inhibit the astringent and harsh tastes without impairing the good flavor of cacao. It was also shown that the same effect can be obtained with protein degradation products not only in the powder form but also in the liquid form such as an aqueous protein solution or soy milk.

### • Study 4

### o Changes in Chocolate Formulation

To the prepared chocolate (2) to (4), "HINUTE-HKB" was added according to the formulations listed in Table 5 in the same manner as in Study 1.

The respective chocolates obtained were filled in a mold and solidified in the same manner as in Study 1, aged at 20°C for one week and then evaluated.

In Study 4, the inhibitory effect on astringent and harsh tastes was evaluated by the difference in score from the evaluations of the astringent and harsh taste of Comparative Examples 5, 6, and 7 in which only any one of the chocolate (2) to the chocolate (4) was used. The results are listed in Table 5.

**[Table 5]**

| | Comparative Example 5 | Example 17 | Comparative Example 6 | Example 18 | Comparative Example 7 | Example 19 |
|---|---|---|---|---|---|---|
| Chocolate (2) [parts] | 100 | 100 | 0 | 0 | 0 | 0 |
| Chocolate (3) [parts] | 0 | 0 | 100 | 100 | 0 | 0 |
| Chocolate (4) [parts] | 0 | 0 | 0 | 0 | 100 | 100 |
| HINUTE-HKB [parts] | 0 | 0.01 | 0 | 0.01 | 0 | 0.01 |
| Amount of free amino acids in protein degradation product/solid content of protein degradation product [%] | - | 22 | - | 22 | - | 22 |
| Astringent and harsh tastes | 2 | 5 | 1 | 5 | 2 | 5 |
| Inhibitory effect on astringent and harsh taste | 0*1 Not effective | 3*1 Remarkably effective | 0*2 Not effective | 4*2 Remarkably effective | 0*3 Not effective | 3*3 Remarkably effective |

| | | | | | | |
|---|---|---|---|---|---|---|
| *1 Difference in score from the evaluation of astringent and harsh tastes in Comparative Example 5 *2 Difference in score from the evaluation of astringent and harsh tastes in Comparative Example 6 *3 Difference in score from the evaluation of astringent and harsh tastes in Comparative Example 7 | | | | | | |

The inhibitory effect on astringent and harsh tastes by the hydrolyzed protein degradation product was confirmed regardless of the origin of the cocoa ingredient and the chocolate formulation.

From the results obtained in Studies 1 to 4, Comparative Examples and Examples are listed in Table 6 below, and the range in which the effect was confirmed is shown.

**[Table 6]**

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Nonfat cocoa solid/solid content [%] | 30.7 | 30.7 | 30.7 | 30.7 | 30.7 | 40.0 | 18.2 |
| Polyphenols/product [mg/100 g] | 3503 | 3503 | 3503 | 3503 | 2292 | 4548 | 2090 |
| Protein degradation product | No | No | No | No | No | No | No |
| Vegetable protein degradation product | No | No | No | No | No | No | No |
| Amount of free amino acids in protein degradation product/solid content of protein degradation product [%] | - | 0.1 or less* | 0.1 or less* | 0.1 or less* | - | - | - |
| Inhibitory effect on astringent and harsh taste | 0 | 1 | 0 | 1 | 0 | 0 | 0 |
| | Example 1 | Example 2 | Example 3 | Example 4 | Example 5 | Example 6 | |
| Nonfat cocoa solid/solid content [%] | 30.7 | 30.7 | 30.7 | 30.7 | 30.5 | 30.5 | |
| Polyphenols/product [mg/100 g] | 3503 | 3503 | 3503 | 3500 | 3486 | 3475 | |
| Protein degradation product | Yes | Yes | Yes | Yes | Yes | Yes | |
| Vegetable protein degradation product | Yes | Yes | Yes | Yes | Yes | Yes | |
| Amount of free amino acids in protein degradation product/solid content of protein degradation product [%] | 22 | 22 | 22 | 22 | 22 | 22 | |
| Inhibitory effect on astringent and harsh taste | 4 | 4 | 2 | 4 | 4 | 4 | |

| | Example 7 | Example 8 | Example 9 | Example 10 | Example 11 | Example 12 | |
|---|---|---|---|---|---|---|---|
| Nonfat cocoa solid/solid content [%] | 30.4 | 30.2 | 30.7 | 30.7 | 30.7 | 30.7 | |
| Polyphenols/product [mg/100 g] | 3468 | 3451 | 3503 | 3503 | 3503 | 3468 | |
| Protein degradation product | Yes | Yes | Yes | Yes | Yes | Yes | |
| Vegetable protein degradation product | Yes | Yes | Yes | Yes | No | Yes | |
| Amount of free amino acids in protein degradation product/solid content of protein degradation product [%] | 22 | 22 | 2 | 0.3 | 4 | 13 | |
| Inhibitory effect on astringent and harsh taste | 4 | 4 | 3 | 2 | 2 | 3 | |
| | Example 13 | Example 14 | Example 15 | Example 16 | Example 17 | Example 18 | Example 19 |
| Nonfat cocoa solid/solid content [%] | 30.7 | 30.7 | 30.7 | 30.7 | 30.7 | 40.0 | 18.2 |
| Polyphenols/product [mg/100 g] | 3468 | 3468 | 3468 | 3468 | 2292 | 4548 | 2090 |
| Protein degradation product | Yes | Yes | Yes | Yes | Yes | Yes | Yes |
| Vegetable protein degradation product | Yes | Yes | Yes | Yes | Yes | Yes | Yes |
| Amount of free amino acids in protein degradation product/solid content of protein degradation product [%] | 19 | 15 | 21 | 9 | 22 | 22 | 22 |
| Inhibitory effect on astringent and harsh taste | 3 | 3 | 4 | 4 | 3 | 4 | 3 |

| | | | | | | | |
|---|---|---|---|---|---|---|---|
| * The amount of free amino acids [%] in the solid content of the soybean protein used is shown. | | | | | | | |

For chocolate as a cocoa-containing food or beverage,
when the proportion of nonfat cocoa solid in solid content was 16 mass% or more, the inhibitory effect on astringent and harsh tastes was confirmed.

As the preferred range, it was shown that
the polyphenol content of the cocoa-containing food or beverage is from 1300 mg/100 g to 6000 mg/100 g;
the free amino acid content in the solid content of the hydrolyzed protein degradation product is 2 mass% or more;
the hydrolyzed protein degradation product is derived from a vegetable; and
the hydrolyzed protein degradation product was derived from beans.

### • Study 5

### o Study on Chocolate Drinks

As another example of the cocoa-containing food or beverage, it was confirmed whether the addition of the hydrolyzed protein degradation product to chocolate drinks can provide a similar inhibitory effect on astringent or harsh tastes.

Water was heated to 60°C and stirred with T. K. HOMOMIXER MARK II Model 2.5 (available from PRIMIX Corporation) to dissolve 0.1 parts of emulsifier. Ten parts of chocolate (1) or the chocolate of Example 1, completely melted by controlling the temperature to 60°C, was added, 0.1 parts of thickening polysaccharide was added, followed by continued stirring for 10 minutes to prepare a chocolate drink. The chocolate drink was then aged in a refrigerator, and the flavor was evaluated.

When a chocolate drink was prepared in the same manner as above, 0.001 parts of "HINUTE-HKB" was added in addition to the chocolate (1). The chocolate drink was then aged in a refrigerator, and the flavor was evaluated.

The inhibitory effect on astringent and harsh tastes was evaluated by the difference in score from the evaluation of the astringent and harsh tastes of Comparative Example 7 prepared using the chocolate (1) alone. The results are listed in Table 7.

Noted that, as the thickening polysaccharide, processed starch "Farinex VA70WM" (available from Royal Avebe U.A.) was used. As the emulsifier, sucrose stearate "Ryoto Sugar Ester S-570" (available from Mitsubishi Chemical Corporation) was used.

**[Table 7]**

| | Comparative Example 8 | Example 20 | Example 21 |
|---|---|---|---|
| Chocolate (1) [parts] | 10.0 | 0 | 10.0 |
| Example 1 [parts] | 0 | 10.0 | 0 |
| HINUTE-HKB [parts] | 0 | 0 | 0.001 |
| Emulsifier [parts] | 0.1 | 0.1 | 0.1 |
| Thickening polysaccharide [parts] | 0.1 | 0.1 | 0.1 |
| Water [parts] | 89.8 | 89.8 | 89.8 |
| Nonfat cocoa solid/solid content [%] | 30.2 | 30.2 | 30.2 |
| Amount of free amino acids in protein degradation product/solid content of protein degradation product [%] | - | 22 | 22 |
| Astringent and harsh tastes | 2 | 5 | 5 |
| Inhibitory effect on astringent and harsh tastes | 0 | 3 | 3 |
| | Not effective | Remarkably effective | Remarkably effective |

### • Study 6

### o Study on Chocolate Filling

As an application example of a food containing chocolate, it was confirmed that the addition of the hydrolyzed protein degradation product to chocolate fillings can provide a similar inhibitory effect on astringent or harsh tastes.

Water and an emulsifier were stirred according to the formulations listed in Table 8 using the same apparatus as in the case of preparing the chocolate drink in Study 5. The melted chocolate was then added, 8 parts of thickening polysaccharide were added, followed by continued stirring for 10 minutes, and heated to 90°C. Then, the mixture was aged in a refrigerator to prepare a chocolate filling.

When a chocolate filling was prepared in the same manner as above, 0.001 parts of "HINUTE-HKB" was added in addition to the chocolate (1).

The inhibitory effect on astringent and harsh tastes was evaluated by the difference in score from the evaluation of the astringent and harsh tastes of Comparative Example 8 prepared using the chocolate (1) alone. The results are listed in Table 8.

**[Table 8]**

| | Comparative Example 9 | Example 22 | Example 23 |
|---|---|---|---|
| Chocolate (1) [parts] | 10.0 | 0 | 10.0 |
| Example 1 [parts] | 0 | 10.0 | 0 |
| HINUTE-HKB [parts] | 0 | 0 | 0.001 |
| Emulsifier [parts] | 0.1 | 0.1 | 0.1 |
| Thickening polysaccharide [parts] | 8.0 | 8.0 | 8.0 |
| Water [parts] | 81.9 | 81.9 | 81.9 |
| Nonfat cocoa solid/solid content [%] | 18.3 | 18.3 | 18.3 |
| Amount of free amino acids in protein degradation product/solid content of protein degradation product [%] | - | 22 | 22 |
| Astringent and harsh tastes | 2 | 5 | 5 |
| Inhibitory effect on astringent and harsh tastes | 0 | 3 | 3 |
| | Not effective | Remarkably effective | Remarkably effective |

The results of Studies 5 and 6 showed that the effect of adding the hydrolyzed protein degradation product is exhibited not only in chocolate but also in other foods and beverages as long as they contain cocoa. It was also shown that adding the hydrolyzed protein degradation product is not limited to the preparation of chocolate, and the effect is exhibited at any time during the preparation of cocoa-containing foods or beverages.

### • Study 7

### Chocolate for Frozen Dessert Combination

Chocolate, which is one of the cocoa-containing foods and beverages, was prepared according to the formulations listed in Table 9 by the same method as in the preparation of chocolate described above. In Examples, HINUTE-HKB (available from Fuji Oil Co., Ltd.), which is a hydrolyzed protein degradation product, was added, and chocolate to which HINUTE-HKB was not added was used as a Comparative Example.

Noted that the cocoa powder used was commercially available with an oil content of 11 mass%.

As the vegetable oil and/or fat, palm fractionated soft oil with an iodine value of 68 was used.

As the lecithin, SLP-Paste (soybean lecithin; available from Tsuji Oil Mills Co., Ltd.) was used.

The prepared chocolate was filled in a mold and solidified in the same manner as in Study 1, and the chocolate was aged at 20°C for one week and then evaluated.

Further, each chocolate was coated on an ice cream bar, and the chocolate was aged at - 20°C for one week, and then evaluated in the same manner.

The coating on the ice cream bar was performed by adjusting the temperature of each melted chocolate to 40°C and immersing a vanilla bar (available from Lotte Corporation) therein.

In Study 7, the inhibitory effect on astringent and harsh tastes was evaluated by the difference in score from the evaluation of the astringent and harsh tastes of Comparative Example 9. The results are listed in Table 9.

**[Table 9]**

| | Comparative Example 10 | Example 24 |
|---|---|---|
| Cocoa mass 1 [parts] | 31.9 | 31.9 |
| Cocoa powder [parts] | 22.5 | 22.5 |
| Sugar [parts] | 17.1 | 17.1 |
| Cocoa butter [parts] | 19.7 | 19.7 |
| Vegetable oil and/or fat [parts] | 8.8 | 8.8 |
| HINUTE-HKB [parts] | - | 0.01 |
| Lecithin [parts] | 0.3 | 0.3 |
| Cocoa content/product [%] | 72.3 | 72.3 |
| Nonfat cocoa solid/product [%] | 32.7 | 32.7 |
| Nonfat cocoa solid/solid content [%] | 33.3 | 33.3 |
| Polyphenols/product [mg/100 g] | 2615 | 2614 |
| Astringent and harsh tastes | 1 | 4 |
| Inhibitory effect on astringent and harsh tastes | 0 | 3 |
| | Not effective | Remarkably effective |
| Astringent and harsh tastes (when coating frozen dessert) | 1 | 4 |
| Inhibitory effect on astringent and harsh tastes (when coating frozen dessert) | 0 | 3 |
| | Not effective | Remarkably effective |

In Examples in which the hydrolyzed protein degradation product was added, the astringent and harsh tastes were inhibited, and the chocolate had a good cacao flavor. The flavor was also confirmed when the coating was applied to frozen dessert.

### • Study 8

### o Study on Small Grain Protein Degradation Product

In the same manner as in Study 3, wheat proteins "A-glu G" (available from Glico Nutrition Co., Ltd.) were dissolved in water to a protein concentration of 5 mass%, and were decomposed at 53°C for 2 hours or 4 hours using endopeptidase and exopeptidase as protein hydrolases. Thereafter, the aqueous solutions were heated at 80°C or higher for 10 minutes or longer to inactivate the enzymes, and the resulting aqueous solutions were each used as a sample F and a sample G of the hydrolyzed protein degradation products. Each was added to the chocolate (1) according to the formulations listed in Table 10.

The addition of the sample F or the sample G to the chocolates was performed by adding the sample F or the sample G to the chocolate melted at 50 to 60°C using a stirrer equipped with a propeller blade (available from TOKYO RIKAKIKAI CO., LTD.), and then stirring the mixture at a rotation speed of 400 rpm for 5 minutes.

In the same manner, oat proteins "PrOatein" (product sold by DKSH Japan K. K.) were dissolved in water to a protein concentration of 5 mass%, and were decomposed at 53°C for 2 hours or 4 hours using endopeptidase and exopeptidase as protein hydrolases. Thereafter, the aqueous solutions were heated at 80°C or higher for 10 minutes or longer to inactivate the enzymes, and the resulting aqueous solutions were used as a sample H and a sample I of the hydrolyzed protein degradation products. Each was added to the chocolate (1) according to the formulations listed in Table 10.

The formulations and results are listed in Table 10.

**[Table 10]**

| | Example 25 | Example 26 | Example 27 | Example 28 |
|---|---|---|---|---|
| Chocolate (1) [parts] | 99.0 | 99.0 | 99.0 | 99.0 |
| Wheat protein degradation product (sample F) [Parts] | 1.0 | 0 | 0 | 0 |
| Wheat protein degradation product (sample G) [Parts] | 0 | 1.0 | 0 | 0 |
| Oat protein degradation product (sample H) [parts] | 0 | 0 | 1.0 | 0 |
| Oat protein degradation product (sample I) [parts] | 0 | 0 | 0 | 1.0 |
| Nonfat cocoa solid/solid content [%] | 30.7 | 30.7 | 30.7 | 30.7 |
| Amount of free amino acids in protein degradation product/solid content of protein degradation product [%] | 18 | 23 | 8 | 10 |
| Astringent and harsh tastes | 4 | 5 | 4 | 5 |
| Inhibitory effect on astringent and harsh tastes | 3 | 4 | 3 | 4 |
| | Remarkably effective | Remarkably effective | Remarkably effective | Remarkably effective |

Even when wheat proteins or oat proteins were hydrolyzed, the astringent and harsh tastes of the cocoa-containing food or beverage were inhibited, allowing a chocolate with a good cocoa flavor to be prepared. The astringent taste inhibitory effect was obtained in the same manner as in the case of using the protein degradation product obtained by hydrolyzing the protein derived from beans.

Therefore, for chocolate as a cocoa-containing food or beverage,
when the proportion of nonfat cocoa solid in solid content was 16 mass% or more, the inhibitory effect on astringent and harsh tastes was confirmed.

As the preferred range, it was shown that, in addition to the "hydrolyzed protein degradation product is derived from beans", the case where the hydrolyzed protein degradation product is derived from small grains is included.

### Industrial Applicability

The present invention can provide a cocoa-containing food or beverage in which unpleasant tastes such as astringent or harsh tastes derived from a cocoa ingredient are inhibited. Further, it is possible to provide a cocoa astringent taste inhibitor that can inhibit an unpleasant taste such as astringent or harsh tastes derived from a cocoa ingredient.

## Claims

1. A cocoa-containing food or beverage comprising a hydrolyzed protein degradation product and having a proportion of nonfat cocoa solid in solid content of 16 mass% or more.

2. The cocoa-containing food or beverage according to claim 1, wherein a free amino acid content in a solid content of the hydrolyzed protein degradation product is 2 mass% or more.

3. The cocoa-containing food or beverage according to claim 1 or 2, having a polyphenol content of from 1300 mg/100 g to 6000 mg/100 g.

4. The cocoa-containing food or beverage according to claim 3, wherein the cocoa-containing food or beverage is chocolate.

5. A cocoa astringent taste inhibitor, comprising a hydrolyzed protein degradation product as an active ingredient.

6. The cocoa-containing food or beverage according to claim 1 or 2, wherein the hydrolyzed protein degradation product is derived from a vegetable.

7. The cocoa-containing food or beverage according to claim 3, wherein the hydrolyzed protein degradation product is derived from a vegetable.

8. The cocoa-containing food or beverage according to claim 4, wherein the hydrolyzed protein degradation product is derived from a vegetable.

9. The cocoa-containing food or beverage according to claim 6, wherein the hydrolyzed protein degradation product is derived from beans or small grains.

10. The cocoa-containing food or beverage according to claim 7, wherein the hydrolyzed protein degradation product is derived from beans or small grains.

11. The cocoa-containing food or beverage according to claim 8, wherein the hydrolyzed protein degradation product is derived from beans or small grains.

12. A method for producing a cocoa-containing food or beverage having a proportion of nonfat cocoa solid in solid content of 16 mass% or more, the method comprising blending a hydrolyzed protein degradation product.

13. A method for producing chocolate having a proportion of nonfat cocoa solid in solid content of 16 mass% or more, the method comprising blending a hydrolyzed protein degradation product in any one of the following steps (A) to (D):
(A) mixing a powder raw material including cocoa powder and saccharide with a part of cocoa mass and/or oil and/or fat in blending;
(B) refining dough obtained by mixing the powder raw material with a part of the cocoa mass and/or oil and/or fat;
(C) kneading or mixing the refined dough with the remaining cocoa mass and/or oil and/or fat to prepare a chocolate dough; and
(D) cooling and solidifying the chocolate dough by controlling a temperature of the chocolate dough.

14. A method for inhibiting an astringent taste derived from cacao, the method comprising blending a hydrolyzed protein degradation product into a cocoa-containing food or beverage.
